Europäisches Patentamt

European Patent Office

Office européen des brevets

(19)

(11) **EP 0 909 604 B1**

(12) **FASCICULE DE BREVET EUROPEEN**

(45) Date de publication et mention
de la délivrance du brevet:
**23.04.2003 Bulletin 2003/17**

(51) Int Cl.⁷: **B23K 9/09**

(21) Numéro de dépôt: **98402440.6**

(22) Date de dépôt: **05.10.1998**

(54) **Procédé de soudage mig spray modulé**

Verfahren zum modulierten MIG Spritzschweissen

Modulated MIG spray welding method

(84) Etats contractants désignés:
**AT BE CH DE DK ES FI FR GB IT LI NL SE**

(30) Priorité: **16.10.1997 FR 9712975**

(43) Date de publication de la demande:
**21.04.1999 Bulletin 1999/16**

(73) Titulaire: **LA SOUDURE AUTOGENE FRANCAISE**
**F-75007 Paris (FR)**

(72) Inventeurs:
• **Matile, Olivier**
**75018 Paris (FR)**

• **Plottier, Gérard**
**93380 Pierrefitte (FR)**

(74) Mandataire: **Pittis, Olivier**
**L'Air Liquide, S.A.,**
**Service Brevets & Marques,**
**75, Quai d'Orsay**
**75321 Paris Cedex 07 (FR)**

(56) Documents cités:
**EP-A- 0 422 763         US-A- 4 366 362**

• **PATENT ABSTRACTS OF JAPAN vol. 6, no. 14
(M-108), 27 janvier 1982 & JP 56 134075 A
(NIPPON KOKAN KK), 20 octobre 1981**

**Description**

L'invention concerne un procédé de soudage MIG, considéré comme l'état de la technique le plus proche, spray, avec une fréquence superposée à une pulsation basse fréquence. La fréquence de pulsation basse est comprise entre 40 et 60 Hz, avec un temps bas de 2.8 ms. Il y a pulvérisation de gouttelettes en haut et en bas du cycle de courant avec gaz inerte de protection, tels l'argon, l'hélium et/ou les mélanges argon/hélium, de l'aluminium, des alliages d'aluminium et des aciers inoxydables, permettant d'améliorer la qualité et la compacité des cordons de soudure.

Actuellement, le procédé le plus utilisé en soudage de l'aluminium et de ses alliages est le procédé TIG (pour Tungsten Inert Gas), lequel permet d'obtenir des cordons de soudure de qualité et de compacité supérieures à ceux obtenus par mise en oeuvre des procédés MIG (pour Metal Inert Gas).

Cependant, le procédé TIG ne peut être considéré comme pleinement satisfaisant car il engendre des vitesses de soudage nettement inférieures à celles des procédés MIG et donc une productivité plus faible.

En fait, le problème de compacité (porosité des cordons de soudure) repose sur une solubilité élevée de l'hydrogène ($H_2$) dans le métal fondu.

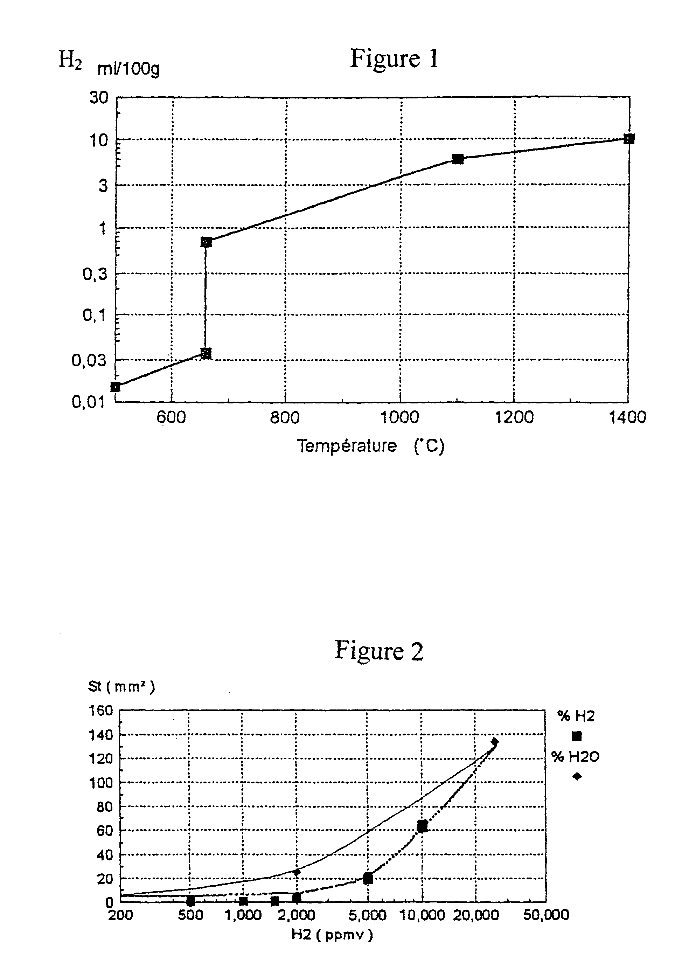

En d'autres termes, la formation de porosités par incorporation d'hydrogène est d'autant plus grande que la température du matériau est supérieure à sa température de fusion. A titre d'exemple, la courbe de solubilité de l'hydrogène dans l'aluminium pur en fonction de la température du métal est donnée en figure 1.

En soudage, il existe classiquement plusieurs sources d'hydrogène qui sont notamment des contaminants, tels des hydrocarbures (graisses, huiles...) ou de la vapeur d'eau présents, sur les pièces à souder et/ou sur le fil, l'humidité présente dans les canalisations et la ou les bouteilles de gaz, les entrées d'air ou fuites au niveau des raccords agencés sur les canalisations de gaz et les condensations internes s'opérant dans la buse de soudage.

Pendant l'opération de soudage, ces divers contaminants se dissocient dans l'arc électrique en donnant notamment de l'hydrogène qui se dissout immédiatement dans le bain de métal fondu et les gouttes dans l'arc de soudage.

Ensuite, les mouvements de convection du bain de métal fondu transportent le liquide saturé en hydrogène vers les zones de métal fondu de température inférieure, conduisant ainsi à la formation de porosités durant le processus de solidification du métal par refroidissement.

L'incorporation ou chargement en hydrogène est, selon la loi de Sievert, proportionnelle à la racine carrée de la pression partielle d'hydrogène au-dessus du bain de métal en fusion.

Afin de minimiser ce problème, il est généralement effectué :

- un prétraitement des pièces à souder, tel un dégraissage, un brossage ou un grattage, puis un stockage subséquent de durée limitée desdites pièces à l'abri des contaminents précités jusqu'à leur soudage proprement-dit,
- un stockage et une utilisation du métal d'apport (fil) dans un dévidoir étanche, inerté et chauffé,
- un choix de paramètres électriques permettant d'éviter les turbulences de protection gazeuse avec entrée d'air humide, en particulier de maintien d'une longueur d'arc réduite et régulée,
- un choix de position de soudage favorisant le dégazage,
- et/ou un choix de vitesse de soudage adaptée à une évacuation favorable des gaz dissous (dégazage du métal liquide).

Cependant, on comprend aisément que ces précautions sont très contraignantes et, pour certaines, engendrent une augmentation notable du coût global du procédé de soudage.

Une autre technique consiste à utiliser un métal d'apport contenant des micro-alliages, tel du cobalt, destinés à multiplier le nombre de sites de nucléation en réduisant ainsi la taille des porosités contenues dans le cordon de soudure. Toutefois, cette technique ne permet pas de réduire la porosité globale du cordon et sa qualité ne s'en trouve donc que peu, voir pas, améliorée.

En outre, il est également connu de procéder à une agitation du bain de soudage soit par agitation mécanique directe, telle une mise en vibration, soit par application de champs électromagnétiques extérieurs au circuit de soudage. Ainsi, il a déjà été décrit un procédé de soudage TIG avec courant continu, électrode à polarité négative et avec ou sans métal d'apport, mettant en oeuvre une agitation électromagnétique par application d'un champ magnétique externe, alternatif et perpendiculaire aux pièces à souder, l'une avec l'autre. Toutefois, les résultats obtenus montrent que pour une fréquence de 15 Hz, l'agitation engendre une porosité plus élevée que sans champ électromagnétique.

Par ailleurs, le document US-A-3,409,756 enseigne un procédé de soudage à l'arc de type spray mettant en oeuvre des variations périodiques de la puissance de l'arc entre une valeur haute et une valeur basse, par exemple entre 18600 et 12500 watts.

A l'inverse, le document US-A-3,956,610 divulgue un procédé de soudage des métaux ferreux, des aciers et alliages non-ferreux, mettant en oeuvre des variations périodiques du courant électrique délivré à l'électrode.

Le document EP-A-0607819 décrit un procédé de soudage MAG (pour Metal Active Gas) à l'arc pulsé sous flux gazeux d'oxygène pour le soudage des matériaux galvanisés, tel le zinc. Ce document s'attache donc à résoudre un problème technique différent de celui de la présente invention, à savoir éviter une contamination de la soudure par les vapeurs de zinc se formant au moment du soudage.

En outre, il a également été décrit un procédé de soudage TIG ou MIG pulsé mettant en oeuvre des variations importantes du courant de soudage, de manière à obtenir un affinement avec orientation différente de la structure du métal déposé.

Par ailleurs, le document US-A-5,508,493 décrit un dispositif de soudage MAG permettant d'améliorer l'aspect des cordons de soudure.

Le document US-A-4,273,988 concerne, quant à lui, un procédé de soudage à l'arc pulsé sous gaz de protection constitué de 60% d'hélium, 25% d'argon et de 15% de dioxyde de carbone, et avec transfert de métal en , régime spray à une fréquence de 90 à 400 Hz.

De façon analogue, le document US-A-4,507,543 décrit un procédé de soudage TIG ou plasma à l'arc pulsé et le document US-A-4,749,841 a trait à un procédé de soudage à l'arc pulsé sous gaz de protection constitué de 16-25% d'hélium, de 1-4% de dioxyde de carbone et le complément étant de l'argon.

En outre, le document EP-A-422763, considéré comme l'état de la technique le plus proche, décrit un procédé de soudage MIG bi pulsé, notamment de pièces pour automobiles, sous gaz de protection constitué d'argon contenant de 2 à 5% d'oxygène, avec une fréquence superposée à une pulsation basse fréquence. La fréquence de pulsation basse est comprise entre 40 et 60 Hz, avec un temps bas de 2.8 ms. Il y a pulverisation de gouttelettes en haut et en bas du cycle de courant.

Cependant, aucun de ces procédés connus ne permet de résoudre le problème qui se pose, à savoir d'obtenir un dégazage réellement efficace des impuretés gazeuses susceptibles de venir contaminer le bain de métal en fusion, en particulier de l'hydrogène diffusible, et ne permet donc de conduire à des joints ou cordons de soudure dont l'aspect et la qualité soient améliorés et compatibles avec des exigences industrielles sévères.

Le but de la présente invention est donc de résoudre le problème suscité, c'est-à-dire d'améliorer les procédés de soudage de l'aluminium et de ses alliages en proposant un procédé de soudage MIG à régime spray modulé :

- ne présentant pas les inconvénients susmentionnés,
- permettant d'obtenir un dégazage efficace d'au moins la majeure partie de l'hydrogène diffusible susceptible de se trouver dans le bain de métal en fusion, et ainsi d'améliorer considérablement l'aspect et la qualité des cordons de soudure,
- permettant d'aboutir à un soudage efficace de pièces notamment en aluminium et en ses alliages,
- qui soit de mise en oeuvre aisée et moins onéreuse que les procédés classiques à l'échelle industrielle, et
- qui soit susceptible d'être utilisé tant en soudage manuel qu'en soudage automatique.

La présente invention concerne alors un procédé de soudage MIG à régime spray modulé avec gaz inerte de protection de l'aluminium, des alliages d'aluminium, ou des aciers inoxydables, dans lequel on opère une modulation du courant à une fréquence de modulation incluse dans la plage allant de 10 à 50 Hz avec un temps bas de modulation compris entre environ 4 ms et 15 ms de manière à transférer, en mode spray, des gouttes de métal en fusion, le détachement de plusieurs gouttes s'effectuant uniquement en haut de chaque pulsation de courant, préférentiellement dans la plage d'environ 15 à 39.5 Hz, préférentiellement encore dans la plage d'environ 25 à 35 Hz, et avantageusement d'au moins environ 30 Hz.

Selon le cas le procédé comprend l'une ou plusieurs des revendications suivantes :

- le temps bas de modulation est compris, suivant les vitesses de fil, entre 5 ms et 12 ms (ms pour milliseconde),
- le signal du courant a une forme choisie parmi les formes carrée, sinusoïdale, triangulaire, trapézoïdale, rectangulaire et leurs combinaisons, de préférence un forme carrée ou rectangulaire,
- on applique le signal de courant à un fil dont le diamètre est d'au moins 0,8 mm et, de préférence, d'environ 1 mm à environ 1,6 mm,
- la vitesse de soudage est d'au moins 1 cm.min$^{-1}$ et, de préférence, inférieure à 5 m.min$^{-1}$, et préférentiellement dans la plage 20 cm.min$^{-1}$ à 1 m.min$^{-1}$,
- il comprend, en outre, une régulation de la longueur d'arc à partir d'une mesure de référence obtenue à partir du temps haut et/ou du temps bas agissant sur le courant haut et/ou sur le courant bas, de préférence la longueur d'arc est comprise 5 et 30 mm, préférentiellement entre environ 10 et 20 mm ;
- il comprend, en outre, le maintien d'une différence minimale d'intensité entre le courant haut et le courant bas d'au moins 30 A et, de préférence, d'au moins 100 A environ, préférentiellement de 130 à 250 A ;
- il est mis en oeuvre sous un flux d'un gaz de protection choisi parmi l'hélium, l'argon et leurs mélanges, ledit gaz contenant éventuellement, en outre, du dioxyde de carbone ($CO_2$) et/ou de l'oxygène ($O_2$) en faibles proportions, c'est-à-dire à une teneur inférieure à 2%, de préférence inférieure à 1.6%, voire inférieure à 1% ;
- on opère une fusion d'un fil fusible de soudage de manière à transférer, en mode spray, des gouttes de métal en fusion, la vitesse du fil de soudage étant de 1 à 20 m.min$^{-1}$, de préférence de 3 à 13 m.min$^{-1}$ ;

- l'intensité du courant bas (Ib) est comprise entre 20 et 60 A, de préférence d'environ 30 A ;
- l'intensité du courant haut ou courant de crête (Ic) est comprise entre 150 A et 350 A, de préférence comprise entre environ 190 A et 310 A ;
- l'intensité moyenne (Im) du courant est comprise entre 100 A et 300 A, de préférence comprise entre environ 105 A et 280 A ;
- la fréquence de détachement des gouttes de métal provenant de la fusion du fil fusible est comprise entre 200 et 700 gouttes.s$^{-1}$, le transfert du métal ne s'effectuant que lorsque le courant est en crête.

De préférence, le gaz ou mélange gazeux de protection contient moins de 1.6 % d'oxygène et de dioxyde de carbone, préférentiellement encore moins de 1% d'oxygène et de dioxyde de carbone.

L'invention va maintenant être décrite plus en détail à l'aide d'exemples et en références aux figures annexées, donnés à titre illustratif, mais non limitatif.

Exemples

Les conditions de soudage mises en oeuvre, selon l'invention, reposent sur un régime de courant de type spray auquel est appliqué ou non, selon le cas, une modulation de courant au niveau du générateur.

Le régime spray est le plus propice aux contaminations des gouttes et du métal fondu, de par une longueur d'arc importante, et un transfert de métal important et une surface d'échange élevée, donc un bain de métal en fusion plus facilement contaminable et sensible aux porosités.

Afin de vérifier l'efficacité du procédé de l'invention, différents essais comparatifs ont été menés, dans lesquels des cordons de soudure ont été volontairement contaminés avec de l'hydrogène, alors qu'ils étaient réalisés au moyen d'un procédé de soudage soit en régime spray normal sans modulation de courant, c'est-à-dire tel que l'enseigne l'art antérieur, soit avec en régime spray modulé, c'est-à-dire selon la présente invention.

La contamination par l'hydrogène est effectuée par plusieurs méthodes, à savoir par contamination directe du gaz de protection (argon):

- par de l'humidité (vapeur d'eau), de manière à obtenir un gaz de protection pollué par au moins 100 ppmv d'eau (pour partie par million en volume). Le dosage est obtenu par mélange de gaz saturé en humidité par passage dans un humidificateur (débit : 5 l.min$^{-1}$) et de gaz sec (débit : 20 l.min$^{-1}$); le contrôle de la teneur en eau étant réalisé au moyen d'un hygromètre électrolytique couramment accessible dans le commerce; ou
- par de l'hydrogène gazeux, à partir d'une bouteille "mère" contenant un mélange argon/hydrogène, par exemple le mélange Ar+2.5%H2 commercialisé par la société Air Liquide sous la marque NOXAL 2™.

Les cordons de soudure ainsi obtenus sont analysés par contrôle radiographique (compacité) et/ou par examen visuel et macrographique (profil et raccordement des surépaisseurs).

Plus précisément, les porosités prises en compte sont évaluées en trois sites différents de dimensions équivalentes du cordon de soudure obtenu en régime spray avec (sites A', B', C') ou sans (sites A, B, C) modulation de courant, puis classées en trois catégories (i) selon que leurs dimensions sont inférieures à 0.5 mm (i=1), comprises entre 0.5 mm et 1 mm (i=2) ou supérieures à 1 mm (i=3).

On obtient alors un nombre de porosités (Ni) pour chacune de ces trois catégories et pour chaque site du cordon de soudure, à partir duquel on détermine une note radiographique moyenne finale (Nt) répondant à la formule suivante :

$$Nt = 0.5 \times N1 + N2 + 2 \times N3$$

où N1, N2 et N3 sont les moyennes des nombres de porosités des trois prélèvements (sites) pour les catégories 1, 2 ou 3, respectivement.

De là, on évalue la surface apparente de soufflures ou surface de porosités par rapport à la surface du cordon de soudure (par exemple sur environ 1500 mm$^2$).

Le rapport de la surface apparente de soufflures à la surface du cordon permet de comparer les résultats obtenus avec les spécifications de la norme NF A89.220 (critères de la classe E) ou ISO 10042.

A titre illustratif, on a représenté sur la figure 2, la surface de porosités St (en mm$^2$) ou surface de soufflures obtenue selon que la contamination du métal fondu est réalisée par de l'hydrogène ($H_2$) gazeux ou par de la vapeur d'eau ($H_2O$). On constate qu'il faut utiliser un gaz contaminé ayant une teneur en hydrogène (8500 ppmv) 2 à 2,5 fois supérieure à celle en eau (environ 4000 ppmv) pour obtenir un résultat équivalent, par exemple une surface de porosités (St) égale à 50 mm². Les porosités ainsi formées, dues à la contamination du métal fondu par de l'hydrogène, sont représentatives d'une contamination en milieu industriel, à la fois par leur nombre et leurs dimensions.

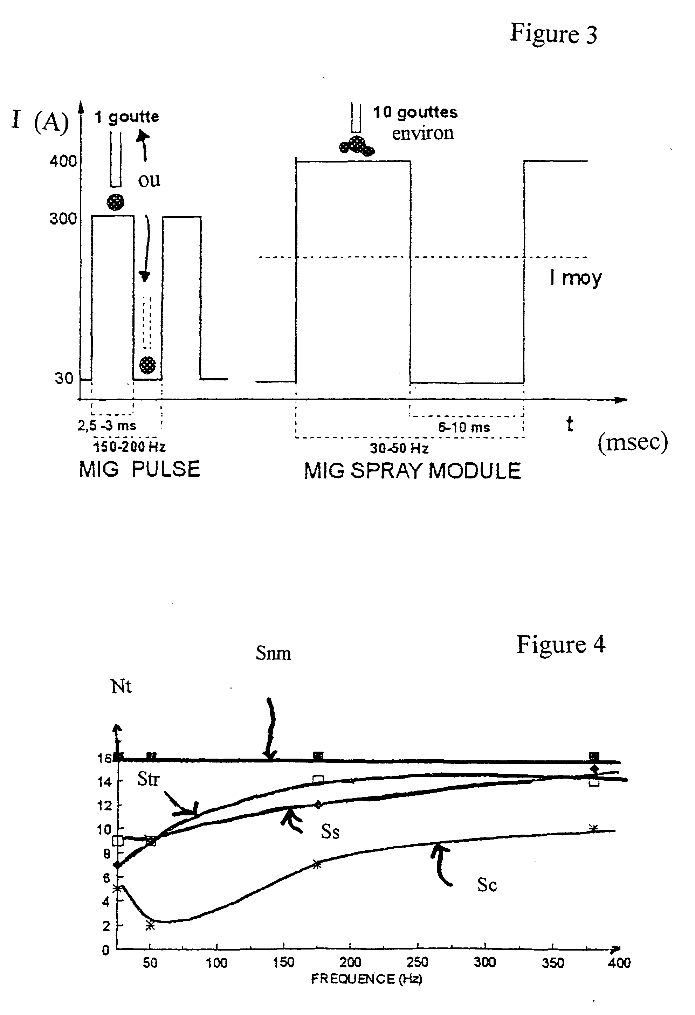

En outre, ainsi que schématisé sur la figure 3, le signal de courant modulé (ci-après appelé MIG spray modulé) mis en oeuvre selon l'invention est centré sur l'intensité moyenne (Imoy) du régime spray et se distingue de celui d'un courant classique pulsé (ci-après appelé MIG pulsé ou non-modulé) par le nombre et le moment du détachement des gouttes de métal fondu. En effet, en soudage MIG pulsé, il y a habituellement détachement d'une seule goutte de métal, en haut ou en bas de chaque pulsation ou pulse de courant, alors qu'en soudage MIG spray modulé, il y a détachement de plusieurs gouttes uniquement en haut de chaque pulsation.

Les échantillons soudés dans les exemples comparatifs ci-après , au moyen du signal modulé ou non, sont des plaques d'aluminium de dimensions : 10 mm x 100 mm x 500 mm, dont une demi-longueur est soudée selon un procédé MIG spray non-modulé, et l'autre demi-longueur est soudée selon un procédé MIG spray modulé.

Le courant spray modulé est initié au moyen d'un générateur synergique de type classique, associé à un générateur de fonctions, permettant de délivrer des signaux de forme notamment carrée, rectangulaire, triangulaire ou sinusoïdale, à une fréquence de 20 à 400 Hz et ayant une amplitude correspondante à celle du générateur de soudage.

Exemple 1 : Influence de la forme du signal

L'influence de la forme du signal de modulation sur la formation des porosités, donc sur l'efficacité de la modulation mise en oeuvre en régime spray modulé, est schématisée sur la figure 4.

Plus précisément, la figure 4 montre la note radiographique (Nt) obtenue en fonction de la fréquence de modulation adoptée pour des signaux de forme carré (Sc), sinusoïdale (Ss) et triangulaire (Str) et, à titre comparatif, sans modulation, c'est-à-dire pour un signal non-modulé (Snm).

On voit que la forme de la modulation de courant a une influence notable sur l'élimination des porosités jusqu'à une fréquence de l'ordre de 150 Hz environ. Au delà d'une fréquence de 150 Hz, l'influence de la modulation de courant existe, mais est globalement moins sensible.

Parmi les différentes formes de signaux, c'est le signal carré (Sc) qui permet le dégazage (évacuation de l'hydrogène dissous) le plus efficace du bain de métal en fusion. Les signaux sinusoïdal (Ss) et triangulaire (Str) donnent, par ailleurs, des résultats corrects et analogues l'un de l'autre.

Il ressort de cet exemple que le signal de forme carrée est préféré en soudage MIG spray modulé.

Exemple 2 : Influence de la fréquence

Cet exemple 2 est analogue a l'exemple 1, mais s'attache, cette fois, à démontrer l'existence d'une plage de fréquence préférentielle pour le soudage MIG spray modulé.

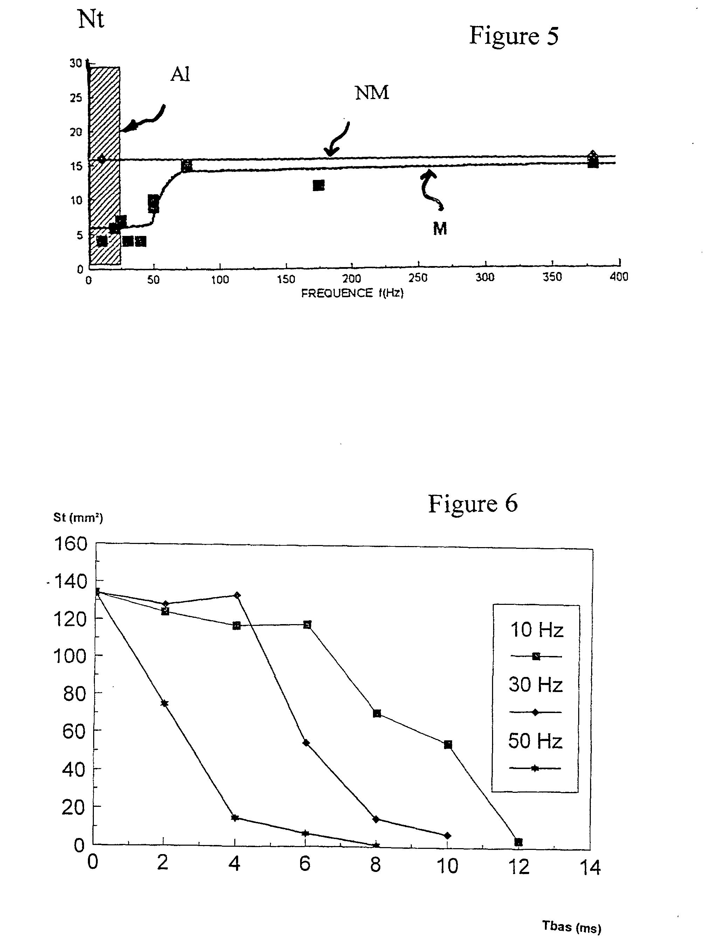

Plus précisément, l'influence de la fréquence du signal de modulation sur la formation des porosités est schématisée sur la figure 5, où est donnée la note radiographique obtenue (Nt) en fonction de la fréquence de modulation adoptée en soudage MIG spray pour un signal carré modulé (M) et, à titre comparatif, d'un signal carré non-modué (NM) et ce, pour une intensité de 200 A

Les résultats obtenus concordent avec ceux obtenus de l'exemple 1, mais on constate cependant que l'efficacité de la modulation diminue beaucoup plus rapidement après 50 Hz que ce qui apparaît sur la figure 4.

La modulation du courant en soudage MIG spray semble réellement efficace pour des valeurs inférieures ou égales à environ 60 Hz, de préférence inférieures ou égales à environ 50 Hz, mais supérieures à une limite basse de fréquence (Al) en dessous de laquelle l'arc devient instable (zone hachurée sur figure 5).

Exemple 3 : Relation temps bas / fréquence

L'influence du temps bas du signal modulé sur la réduction du taux de porosités a été étudiée et est représentée sur la figure 6, pour trois niveaux de fréquences différents, à savoir : 10 Hz, 30 Hz et 50 Hz, et pour un fil de type AG5 de 1.2 mm, une vitesse de soudage de 35 cm.min⁻¹ et une vitesse de fil de 12.5 m.min⁻¹.

Il apparaît que, pour la valeur de fréquence de 50 Hz, on obtient une influence optimale du temps bas, et donc un taux de porosité faible (surface de porosités : St en mm²), à partir d'une valeur de temps bas de 8 ms, alors que, pour une fréquence de 30 Hz, cette influence bénéfique optimale n'apparaît que pour une valeur de temps bas supérieure à 10 ms environ et, pour une fréquence de 10 Hz, cette influence bénéfique optimale n'apparaît que pour une valeur de temps bas supérieure à 12 ms environ.

En fait, l'augmentation de la durée du temps bas provoque vraisemblablement une augmentation rapide du courant haut de modulation et, par là-même, des variations importantes de champ magnétique et de pression de plasma d'arc, lesquelles variations permettent et suffisent à obtenir une agitation efficace du bain de métal en fusion et un dégazage de celui-ci; cette agitation du bain de métal en fusion pouvant se traduire par des oscillations, en résonance ou non, avec les variations d'intensité.

Au vu de ces résultats, les fréquences de modulation comprises entre 10 Hz et 50 Hz ont été étudiées plus en détail, pour un alliage d'aluminium de type 5086, pour des valeurs de temps bas comprises entre 8 et 12 ms, et pour des vitesses de fil (VF) en régime MIG spray modulé de 10 m.min$^{-1}$ à 12.5 m.min$^{-1}$.

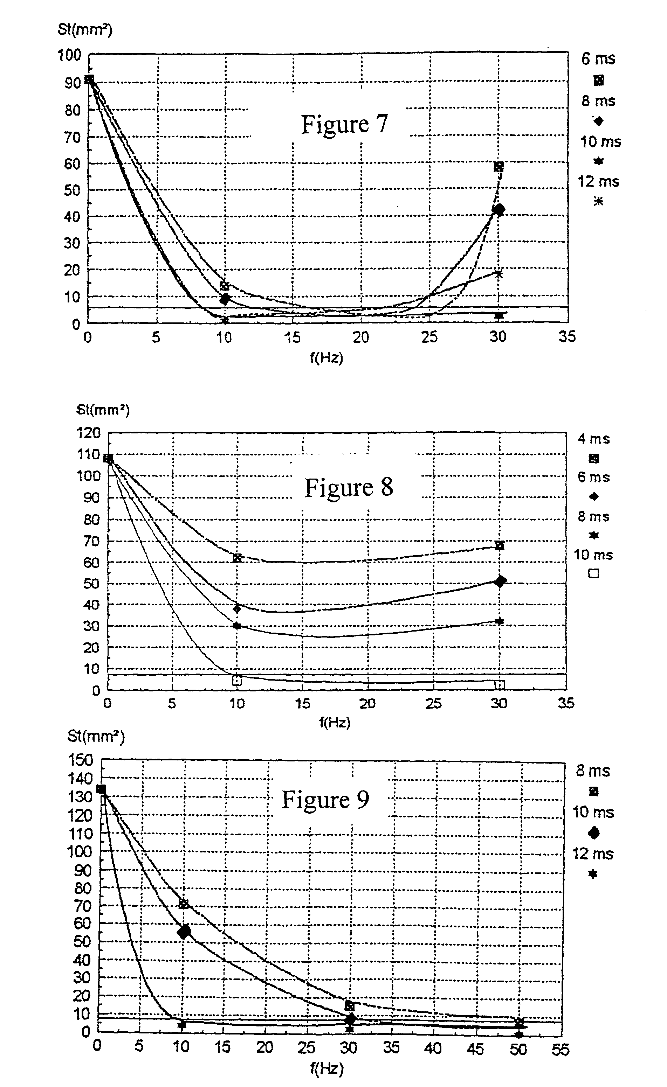

Les résultats obtenus avec un générateur synergique avec Eprom modifié sont schématisés sur les figures 7 à 9, lesquelles correspondent, respectivement, à des vitesses de fil de 10 m.min$^{-1}$, 11 m.min$^{-1}$ et 12.5 m. min$^{-1}$.

Il apparaît alors que, pour l'alliage d'aluminium étudié, les valeurs de temps bas de 10 ms et 12 ms permettent, d'une part, d'obtenir le taux de porosité (St) le plus bas et ce, quelle que soit la vitesse de soudage considérée, et, d'autre part, ont une influence bénéfique et constante sur le taux de porosités dès la fréquence de 10 Hz et jusqu'à la fréquence de 30 Hz. Ces résultats confirment ceux obtenus précédemment.

Exemple 4 : Influence de la vitesse de soudage

Cet exemple vise à étudier l'influence de la vitesse de soudage (VS) sur le dégazage du bain de métal en fusion; le métal étant un alliage d'aluminium de type 5086.

Les paramètres opératoires sont les suivants : un générateur synergique de type 480 TRS commercialisé par LA SOUDURE AUTOGENE FRANCAISE, une torche de soudage de type TM 700 commercialisée par LA SOUDURE AUTOGENE FRANCAISE et munie d'une buse de 30 mm de diamètre, un fil NERTALIC™ 30 commercialisé par LA SOUDURE AUTOGENE FRANCAISE et d'un diamètre de 1.2 mm, une vitesse de fil (VF) de 12.5 m.min$^{-1}$, une intensité de 216 A, une tension de 22.6 V, une contamination artificielle par 2000 ppmv d'hydrogène et, selon le cas, une modulation de courant avec temps bas de 10 ms et fréquence de 30 Hz.

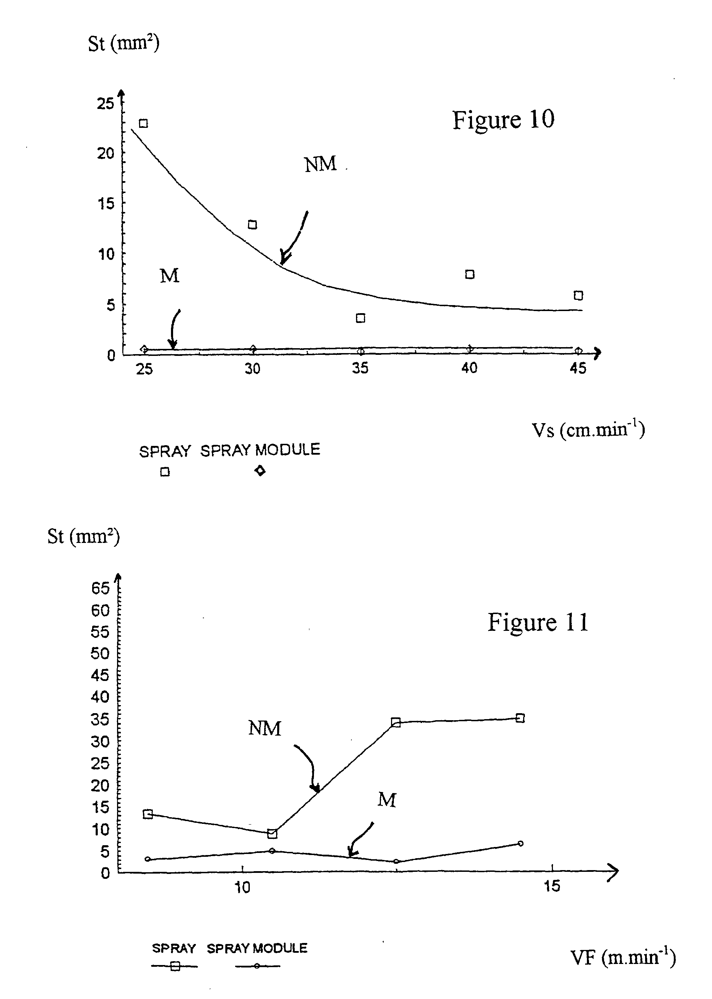

Ainsi qu'il ressort de la figure 10, pour une vitesse de soudage (VS) de 25 à 45 cm.min$^{-1}$, le soudage selon la technique MIG spray modulé (M) permet d'obtenir un dégazage plus efficace du métal en fusion et donc une meilleure compacité du cordon de soudure, que le soudage en MIG spray non modulé (NM), c'est-à-dire pulsé.

L'agitation issue des modulations de courant modifie le front solidus-liquidus du bain de métal en fusion et sa progression non seulement dans le sens axial du cordon de soudure, mais aussi dans le sens de l'épaisseur.

Il en résulte alors, dans certains cas, un affinement de la structure de solidification et une meilleure compacité du cordon de soudure, malgré la contamination artificielle du métal d'apport et du bain de fusion par de l'hydrogène (2000 ppmv dans l'argon).

Exemple 5 : Influence de la vitesse de fil

Cet exemple vise à étudier l'influence de la vitesse de fil (VF) sur le dégazage du bain de métal en fusion; le métal étant un alliage d'aluminium de type 6061.

Les paramètres opératoires mis en oeuvre sont les suivants : un générateur, une torche avec buse et un fil de soudage analogues à ceux de l'exemple 4, une vitesse de soudage (VS) de 30 cm.min$^{-1}$, une intensité de 220-250 A, une tension de 22.6 V, une contamination artificielle par de l'hydrogène à 1500 ppmv et, selon le cas, une modulation de courant avec temps bas de 10 ms et fréquence de 30 Hz.

Ainsi qu'il ressort de la figure 11, pour une vitesse de fil (VF) de 12 à 14.5 m.min$^{-1}$ environ, le soudage MIG spray modulé (M) permet, là encore, d'obtenir un dégazage plus efficace du métal en fusion et donc une meilleure compacité du cordon de soudure, que le soudage en spray non modulé (NM).

Cette gamme de vitesse de fil (VF) correspond sensiblement à celle du régime spray depuis le régime spray arc-court jusqu'au régime spray arc-long.

En outre, on voit également que la densité de porosités croît avec la tension d'arc associée à une vitesse de fil plus importante. Cette augmentation de densité peut s'expliquer principalement par l'apparition de gouttes de métal fondu (fil) plus fines et plus nombreuses pour un parcours dans l'arc électrique plus long, et donc un chargement en hydrogène ou en humidité plus important.

Malgré cela, la modulation de courant appliquée reste très bénéfique en permettant un dégazage efficace du métal en fusion ; l'influence de la modulation ne semble, par ailleurs, pas dépendre de la vitesse du fil.

Exemple 6 : Influence du régime de transfert

L'exemple 6 vise à étudier l'influence du régime de transfert sur le taux de porosités, c'est-à-dire sur le dégazage du bain de métal en fusion, pour les régimes de transfert suivants : spray arc-court (SAC), spray arc-long (SAL), pulsé (RP) et spray long modulé (SLM).

Les conditions opératoires et les résultats obtenus sont consignés dans le tableau I ci-après.

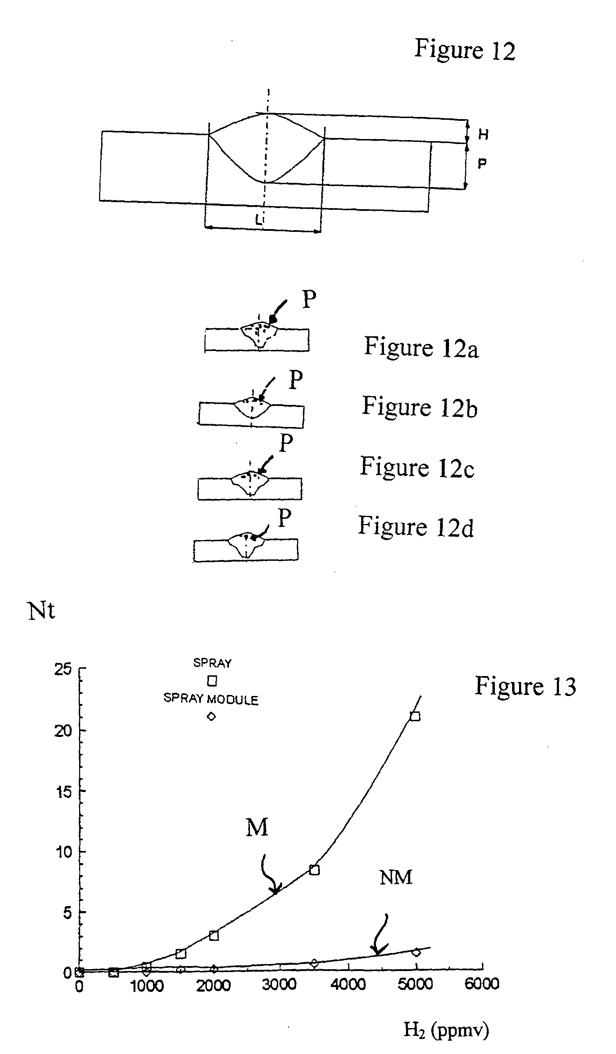

Les zones de mesure de la largeur (L), de la hauteur (H) et de la pénétration (P) de la soudure sont détaillées en Figure 12.

TABLEAU I

| Essai n° | Régime de transfert | L (mm) | H (mm) | P (mm) | Intensité (A) | Tension (V) | Aspect du cordon |
|---|---|---|---|---|---|---|---|
| 1 | SAL | 13 | 3.6 | 4.16 | 210 | 23 | Fig. 12a |
| 2 | SAC | 11.6 | 3.7 | 3.3 | 190 | 19 | Fig. 12b |
| 3 | RP | 13.6 | 3.3 | 4.6 | 194 | 21 | Fig. 12c |
| 4 | SLM | 14.3 | 3.6 | 5.5 | 204 | 21 | Fig. 12d |

Une observation de l'aspect des cordons de soudure obtenus permet de conclure que le régime SAC permet d'obtenir un niveau de porosités très inférieur au régime SAL (cf. réf. p sur Fig. 12a à 12d), ce qui tend à montrer que le chargement du bain de fusion en hydrogène se fait majoritairement dans l'arc électrique par le biais de gouttelettes de métal fines et nombreuses, et d'un temps de parcours plus long, et également par contamination en hydrogène directe du bain de métal en fusion.

Par ailleurs, les taux de porosités obtenus en régime SAC et RP sont sensiblement équivalents, mais néanmoins supérieurs à celui obtenus en régime SLM.

Sur le plan de la géométrie des cordons de soudure, il ressort des figures 12a à 12d qu'en régime SLM (Fig. 12d), la pénétration (P) de la soudure est nettement plus élevée, de par des intensités hautes de modulations plus fortes et une largeur (L) plus grande de la surépaisseur.

En outre, ces résultats montrent clairement que l'agitation du bain de métal en fusion se produit à la fois dans la largeur et dans l'épaisseur du cordon de soudure.

La réduction du taux de porosités et l'amélioration du profil du cordon de soudure se conjuguent et conduisent vraisemblablement à une meilleure tenue en fatigue de tels assemblages et donc des structures assemblées par le biais de soudures réalisées par un procédé de soudage MIG spray modulé.

Exemple 7 : Influence de la proportion d'hydrogène

Cet exemple vise à étudier l'influence de la proportion d'hydrogène contaminant dans le flux de protection (ici de l'argon) sur le taux de porosité lors de la mise en oeuvre d'un procédé de soudage MIG spray modulé.

Les paramètres opératoires sont les suivants : générateur, torche et fil de soudage analogues à ceux de l'exemple 4, et régime spray avec modulation du courant (temps bas de 10 ms; fréquence de 30 Hz) ou, à titre comparatif et de référence, sans modulation de courant.

En outre, le gaz de protection (argon) est contaminé artificiellement avec des quantités croissantes d'hydrogène allant jusqu'à 5000 ppmv. L'alliage d'aluminium est de type 5086 (10 mm).

Les résultats obtenus sont représentés sur la Figure 13, où il apparaît que, même dans le cas plus défavorable, à savoir une contamination de l'argon par 5000 ppmv d'hydrogène, la modulation du courant permet d'obtenir un taux de porosités inférieur à 0.007, ce qui est encore conforme aux exigences de la classe E de la norme NFA 89.220.

Les résultats comparables à ceux obtenus ici avec des alliages d'aluminium de type 5086 (épaisseur 10 mm), peuvent être obtenus avec d'autres alliages d'aluminium, tels notamment les alliages de type 6061.

Exemple 8 : Influence de la différence d'intensité courant haut / courant bas

L'influence de la différence d'intensité ($\Delta I$) entre le courant haut (courant de crête) et le courant bas (courant de base) du signal modulé sur la réduction du taux de porosités a aussi été étudiée, pour des fréquences de modulation comprises entre 10 Hz et 50 Hz, pour un fil de type AG5 de 1.2 mm, une vitesse de soudage de 35 cm.min$^{-1}$ et une vitesse de fil de 12.5 m.min$^{-1}$.

Au vu de ces résultats, la différence d'intensité ($\Delta I$) entre le courant haut (courant de crête) et le courant bas pour des valeurs de temps bas comprises entre 2 ms et 20 ms, de préférence entre 8 et 12 ms, en régime MIG spray modulé doit être d'au moins 30 A, de préférence d'au moins 70 A, de préférence encore d'au moins 100 A.

En effet, pour une vitesse de fil donnée, il est nécessaire de respecter les conditions suivantes lors de la mise en oeuvre du procédé, à savoir :

- un courant de base (Ibase) sensiblement constant et le plus bas possible pour maintenir un arc de soudage sans transfert de métal,

- un courant de crête (Icrête) minimum représentatif d'un régime spray pour un transfert en pulvérisation axiale bien établi.

Ce qui implique donc de respecter une différence d'intensité (ΔI) minimale pour permettre un bon transfert de métal et une bonne efficacité de modulation de courant et donc de réduction de porosités.

En pratique, au niveau pilotage des paramètres, à partir d'une vitesse de fil (Vfil) donnée (donc pour un Imoyen donné), il apparaît que la valeur du temps bas (Tbas) conditionne le courant de crête (Icrête) correspondant et donc directement la différence (ΔI) d'intensité correspondante avec :

$$\Delta I = Icrête-I\ base$$

Donc, pour un courant de base (Ibase) sensiblement constant, plus le temps bas (Tbas) augmente de 8 à 12 ms (voir Fig.6), plus la différence (ΔI =Icrête-Ibase) croît et influe sur la réduction de porosités et ce, jusqu'à une valeur maximale de 10 à 12 ms pour des vitesses de fil (Vfil) d'environ 10 à 12.5 m.mn$^{-1}$ (voir Fig.7,8 et 9), vitesse à partir de laquelle le spray atteint en intensité de crête (Icrête) est trop élevé et est donc aussi associé à une tension d'arc (Uarc) correspondante plus élevée. Cela engendre alors une contamination directe externe des gouttes de métal en fusion dans l'arc de soudage.

Il est possible également qu'une amplitude (Icrête-Ibase) trop importante ait un effet inverse à celui recherché, c'est-à-dire un effet néfaste sur les oscillations du bain, notamment une agitation trop importante du bain et des perturbations de sa protection.

A partir de ces résultats, il est alors possible d'établir, pour une fréquence donnée (par exemple 30Hz) et par diamètre de fil, des courbes représentant le temps bas (Tbas) en fonction de la vitesse de fil (Vfil) permettant de garantir à la fois un domaine opératoire de soudage ouvert et une réduction efficace du taux de porosités.

Ainsi, il apparaît que, pour une valeur de différence d'intensité (ΔI) d'au moins 30 A, on obtient un taux de porosité faible.

Il est à noter, en outre, que le procédé de l'invention présente l'avantage d'être un procédé à régime spray modulé interrompu, c'est-à-dire qu'il ne s'opère un transfert de métal du fil fusible vers le joint de soudure que pendant la pulsation haute de courant ou courant haut.

De là, le courant de base ou courant bas n'est qu'un courant de maintien d'arc sans transfert de métal en fusion, ce qui permet, par ailleurs, d'opérer à une plus grande variation d'intensité entre le courant bas et le courant haut, de manière à obtenir des oscillations plus importantes du bain de métal en fusion constituant le joint de soudure et donc un dégazage plus efficace de celui-ci.

Le procédé de soudage MIG à régime spray modulé selon la présente invention peut être appliqué, tant en soudage manuel qu'en soudage automatique, au soudage de toute pièce ou composant en l'aluminium, en alliage d'aluminium ou en acier inoxydable.

**Revendications**

**1.** Procédé de soudage MIG à régime spray modulé avec gaz inerte de protection de l'aluminium, des alliages d'aluminium, ou des aciers inoxydables, dans lequel on opère une modulation du courant à une fréquence de modulation incluse dans la plage allant de 10 à 50 Hz avec un temps bas de modulation compris entre environ 4 ms et 15 ms de manière à transférer, en mode spray, des gouttes de métal en fusion, le détachement de plusieurs gouttes s'effectuant uniquement en haut de chaque pulsation de courant.

**2.** Procédé selon la revendication 1, **caractérisé en ce que** la fréquence de modulation est dans la plage 15 à 39.5 Hz, de préférence dans la plage d'environ 25 à 35 Hz.

**3.** Procédé selon l'une des revendications 1 ou 2, **caractérisé en ce que** le temps bas de modulation est compris entre environ 5 ms et 12 ms.

**4.** Procédé selon l'une des revendications 1 à 3, **caractérisé en ce que** le signal du courant a une forme choisie parmi les formes carrée, sinusoïdale, triangulaire, trapézoïdale, rectangulaire et leurs combinaisons.

**5.** Procédé selon l'une des revendications 1 à 4, **caractérisé en ce qu'**on applique le signal de courant à un fil fusible dont le diamètre est d'au moins 0,8 mm et, de préférence, d'environ 1 mm à environ 1,6 mm.

**6.** Procédé selon l'une des revendications 1 à 5, **caractérisé en ce que** la vitesse de soudage est d'au moins 1cm. min$^{-1}$ et, de préférence, d'au plus 5 m.min$^{-1}$, de préférence comprise dans la plage 20 cm.min$^{-1}$ environ à 1 m. min$^{-1}$ environ.

**7.** Procédé selon l'une des revendications 1 à 6, **caractérisé en ce qu'**il comprend, en outre, une régulation de la longueur d'arc à partir d'une mesure de référence obtenue à partir du temps haut et/ou du temps bas agissant sur le courant haut et/ou sur le courant bas.

**8.** Procédé selon l'une des revendications 1 à 7, **caractérisé en ce qu'**il comprend, en outre, le maintien d'une différence minimale d'intensité entre le courant haut et le courant bas d'au moins 30 A et, de préférence, d'au moins 100 A environ.

**9.** Procédé selon la revendication 1, **caractérisé en ce qu'**il est mis en oeuvre sous un flux d'un gaz de protection choisi parmi l'hélium, l'argon et leurs mélanges, ledit gaz contenant éventuellement, en outre, du dioxyde de carbone et/ou de l'oxygène.

**10.** Procédé selon la revendication 1, **caractérisé en ce qu'**on met en oeuvre une protection gazeuse au moyen d'un gaz ou d'un mélange gazeux contenant au moins 90% (en volume) d'au moins un composé gazeux majoritaire choisi parmi l'argon, l'hélium et leurs mélanges et, éventuellement, d'au plus 1.95% (en volume) d'au moins un composé gazeux minoritaire choisi parmi l'oxygène et le dioxyde de carbone, de préférence de 0.01 à 1.80% dudit au moins un composé gazeux minoritaire, en particulier d'oxygène.

**Claims**

**1.** Process for the MIG welding, in modulated spray mode with an inert shielding gas, of aluminium, aluminium alloys or stainless steels, in which the current is modulated at a modulation frequency lying in the range from 10 to 50 Hz with a modulation background time of between approximately 4 ms and 15 ms so as to transfer, in spray mode, drops of molten metal, the detachment of several drops taking place only at the peak of each current pulse.

**2.** Process according to Claim 1, **characterized. in that** the modulation frequency is in the range from 15 to 39.5 Hz, preferably in the range from approximately 25 to 35 Hz.

**3.** Process according to either of Claims 1 and 2, **characterized in that** the modulation background time is between approximately 5 ms and 12 ms.

**4.** Process according to one of Claims 1 to 3, **characterized in that** the current pulse has a waveform chosen from square, sinusoidal, triangular, trapezoidal and rectangular waveforms and combinations thereof.

**5.** Process according to one of Claims. 1 to 4, **characterized in that** the current pulse is applied to a meltable wire whose diameter is at least 0.8 mm and preferably approximately 1 mm to approximately 1.6 mm.

**6.** Process according to one of Claims 1 to 5, **characterized in that** the welding speed is at least 1 cm/min. and preferably at most 5 m/min., and preferably in the range from approximately 20 cm/min. to approximately 1 m/min.

**7.** Process according to one of Claims 1 to 6, **characterized in that** it furthermore comprises a regulation of the arc length based on a reference measurement obtained from the peak time. and/or the background time by varying the peak current and/or the background current.

**8.** Process according to one of Claims 1 to 7, **characterized in that** it furthermore comprises maintaining a minimum current difference between the peak current and the background current of at least 30 A and preferably at least approximately 100 A.

**9.** Process according to Claim 1, **characterized in that** it is carried out under a flow of a shielding gas chosen from helium, argon and mixtures thereof, the said gas optionally furthermore containing carbon dioxide and/or oxygen.

**10.** Process according to Claim 1, **characterized in that** a gas shield is employed by means of a gas or gas mixture containing at least 90% (by volume) of at least one major gaseous component chosen from argon, helium and mixtures thereof and, optionally, at most 1.95% (by volume) of at least one minor gaseous component chosen from oxygen and carbon dioxide, preferably from 0.01 to 1.80% of the said at least one minor gaseous component, in particular oxygen.

**Patentansprüche**

1. Verfahren zum modulierten MIG-Spritzschweiße mit inertem Schutzgas von Aluminium, Aluminiumlegierungen oder nichtrostenden Stahlen, wobei eine Modulation des Stroms mit einer Modulationsfrequenz durchgeführt wird, die sich zwischen 10 und 50 Hz bewegt, mit einer Niedrigpegelmodulationszeit, die zwischen etwa 4 ms und 15 ms liegt, so daß im Spritzmodus geschmolzene Metalltropfen übergeben werden, wobei die Ablösung mehrerer Tropfen nur an der Spitze jedes Stromimpulses erfolgt.

2. Verfahren nach Anspruch 1, **dadurch gekennzeichnet, daß** die Modulationsfrequenz im Bereich von 15 bis 39,5 Hz liegt, vorzugsweise im Bereich von etwa 25 bis 35 Hz.

3. Verfahren nach Anspruch 1 oder 2, **dadurch gekennzeichnet, daß** die Niedrigpegelmodulationszeit zwischen etwa 5 ms und 12 ms liegt.

4. Verfahren nach einem der Ansprüche 1 bis 3, **dadurch gekennzeichnet, daß** das Stromsignal eine Form aufweist, die aus den Formen quadratisch, sinusförmig, dreieckig, trapezförmig, rechteckig oder einer Kombination davon gewählt wird.

5. Verfahren nach einem der Ansprüche 1 bis 4, **dadurch gekennzeichnet, daß** das Stromsignal an einen Schmelzdraht mit einem Durchmesser von mindestens 0,8 mm und vorzugsweise von etwa 1 mm bis etwa 1,6 mm angelegt wird.

6. Verfahren nach einem der Ansprüche 1 bis 5, **dadurch gekennzeichnet, daß** die Schweißgeschwindigkeit mindestens 1 cm.min$^{-1}$ und vorzugsweise höchstens 5 m.min$^{-1}$, beträgt, vorzugsweise im Bereich von etwa 20 cm. min$^{-1}$ bis etwa 1 m.min$^{-1}$ liegt.

7. Verfahren nach einem der Ansprüche 1 bis 6, **dadurch gekennzeichnet, daß** es außerdem eine Regulierung der Lichtbogenlänge umfaßt, auf der Basis einer Bezugsmessung, die ausgehend von der Hochpegelzeit und/oder der Niedrigpegelzeit erhalten wird, die auf den Hochstrom und/oder den Niedrigstrom wirkt.

8. Verfahren nach einem der Ansprüche 1 bis 7, **dadurch gekennzeichnet, daß** es außerdem das Halten einer minimalen Stromstärkedifferenz zwischen dem Hochstrom und dem Niedrigstrom von mindestens 30 A und vorzugsweise von mindestens etwa 100 A umfaßt.

9. Verfahren nach Anspruch 1, **dadurch gekennzeichnet, daß** es unter einem Fluß eines Schutzgases durchgeführt wird, das aus Helium, Argon und deren Mischungen gewählt wird, wobei dieses Gas eventuell außerdem Kohlendioxid und/oder Sauerstoff enthält.

10. Verfahren nach Anspruch 1, **dadurch gekennzeichnet, daß** ein gasförmiger Schutz mit einem Gas oder einem Gasgemisch hergestellt wird, das mindestens 90 Vol.-% mindestens einer mehrheitlichen gasförmigen Zusammensetzung, die aus Argon, Helium und deren Mischungen gewählt wird, und eventuell höchstens 1,95 Vol.-% mindestens einer minderheitlichen gasförmigen Zusammensetzung, die aus Sauerstoff und Kohlendioxid gewählt wird, vorzugsweise 0,01 bis 1,80 % dieser mindestens einen minderheitlichen gasförmigen Zusammensetzung, insbesondere Sauerstoff, enthält.

Figure 1

Figure 2

Figure 3

I (A)

1 goutte

ou

10 gouttes
environ

400

300

I moy

30

2,5 -3 ms

150-200 Hz

6-10 ms

30-50 Hz

t

(msec)

MIG PULSE

MIG SPRAY MODULE

Figure 4

Snm

Nt

Str

Ss

Sc

16

14

12

10

8

6

4

2

0

50    100    150    200    250    300    350    400

FREQUENCE (Hz)

Figure 5

Figure 6

St(mm²)

Figure 7

6 ms

8 ms

10 ms

12 ms

f(Hz)

St(mm²)

Figure 8

4 ms

6 ms

8 ms

10 ms

f(Hz)

St(mm²)

Figure 9

8 ms

10 ms

12 ms

f(Hz)

St (mm²)

Figure 10

NM

M

SPRAY    SPRAY MODULE
   □              ◇

Vs (cm.min⁻¹)

St (mm²)

Figure 11

NM

M

SPRAY    SPRAY MODULE
  □             ○

VF (m.min⁻¹)

15

Figure 12

Figure 12a

Figure 12b

Figure 12c

Figure 12d

Nt

SPRAY

SPRAY MODULE

Figure 13

M

NM

$H_2$ (ppmv)